# EUROPÄISCHE PATENTSCHRIFT

(11) **EP 2 206 943 B1**
(45) Veröffentlichungstag und Bekanntmachung des Hinweises auf die Patenterteilung: **17.10.2012**
(21) Anmeldenummer: 09015918.7
(22) Anmeldetag: 23.12.2009
(51) Int. Cl.: F16L 47/02, F16L 37/088, F16L 37/14

(54) **Kupplungseinrichtung**
Coupling device
Dispositif de couplage

(30) Priorität: 08.01.2009 DE 202009000328 U
(43) Veröffentlichungstag der Anmeldung: 14.07.2010
(73) Patentinhaber: NORMA Germany GmbH, 63477 Maintal (DE)
(72) Erfinder: Bauer, Andreas, 63477 Maintal (DE)
(74) Vertreter: Knoblauch, Andreas

(56) Entgegenhaltungen:
- EP-A2- 1 724 510
- WO-A1-93/14341
- DE-C1- 19 933 061
- DE-U1-202007 017 181
- FR-A1- 2 795 156
- US-A1- 2007 059 972

## Beschreibung

Die Erfindung betrifft eine Kupplungseinrichtung, die einen ersten Teil mit einem ersten Anschlussbereich und einen zweiten Teil mit einem zweiten Anschlussbereich aufweist, wobei zwischen erstem Teil und zweitem Teil ein Dichtring angeordnet ist, der sich radial bis in den ersten Anschlussbereich erstreckt, wobei das erste Teil eine Rastvorrichtung aufweist, mit der das Kupplungsgegenstück rastend festlegbar ist, wobei die Rastvorrichtung einen Bügel aufweist, der senkrecht zur Einführrichtung des Kupplungsgegenstücks bewegbar ist.

Eine derartige Kupplungseinrichtung wird beispielsweise zum Verbinden zweier Leitungsabschnitte verwendet. So wird eine derartige Kupplung z.B. in einem Kühlwassersystem eines Kraftfahrzeugmotors dazu verwendet, einen Kühlwasserschlauch mit einem Anschluss am Motor oder am Kühler zu verbinden. In der Regel ist dabei der erste Anschlussbereich so ausgebildet, dass er mit einem Kupplungsgegenstück lösbar verbunden werden kann. Der zweite Anschlussbereich ist dann häufig so ausgebildet, dass er beispielsweise mit dem Kühlwasserschlauch fest verbindbar ist.

Aus DE 20 2007 017 181 U1 ist eine Kupplung zum Verbinden zweier Kühlsystemabschnitte bekannt, wobei die beiden Teile der Kupplung miteinander verschweißt werden können. Dabei ist zwischen den beiden Teilen der Kupplung eine Schließeinrichtung angeordnet, die zur Steuerung des Kühlmittel-Durchflusses dient. Im ersten Teil ist dabei eine Ringdichtung vorgesehen, die zur Abdichtung gegenüber einem Einsteckteil dient, das in das erste Teil eingeführt werden kann. Eine derartige Kupplung weist eine relativ große axiale Länge auf.

DE 199 33 061 C1 offenbart eine Fluidkupplung nach dem Oberbegriff des Anspruchs 1, mit einem ersten Teil und einem zweiten Teil, die miteinander verschweißt sind, wobei zwischen den Teilen und eine Nut ausgebildet ist, in der eine Ringdichtung angeordnet ist. Die Ringdichtung erstreckt sich dabei radial bis in den ersten Anschlussbereich, der in dem ersten Teil ausgebildet ist. Ein Kupplungsgegenstück ist in den Anschlussbereich des ersten Teils einführbar. Das Kupplungsgegenstück weist Rippen auf, die mit einem Anschlag zusammenwirken, der im ersten Teil ausgebildet ist.

Im Motorraum eines Kraftfahrzeugs herrschen in der Regel beengte Raumverhältnisse. Es ist daher eine Aufgabe der Erfindung, eine Kupplungseinrichtung anzugeben, die einen geringen Bauraumbedarf aufweist.

Erfindungsgemäß wird diese Aufgabe bei einer Kupplungseinrichtung der eingangs genannten Art dadurch gelöst, dass Enden des Bügels an jeweils einer Schrägfläche, die am ersten Teil angeordnet sind, derart geführt sind, dass beim Öffnen des Bügels die Enden über die Schrägflächen nach außen geführt werden, wobei ein Aufweiten des Bügels erfolgt.

Der Dichtring steht also sowohl mit dem ersten Teil als auch mit dem zweiten Teil in Kontakt und übernimmt dabei mehrere Aufgaben. Zum einen dient er zur Abdichtung der Verbindung zwischen dem ersten und dem zweiten Teil. Zum anderen dichtet er gegenüber einem Einsteckelement ab, das in den ersten Anschlussbereich eingeführt werden kann. Da der Dichtring zwischen dem ersten und dem zweiten Teil, also am Ende des ersten Teils angeordnet ist, steht im ersten Anschlussbereich eine relativ lange Führungslänge auch dann zur Verfügung, wenn das erste Teil relativ kurz ausgebildet ist. Die Kupplungseinrichtung kann daher relativ kurz ausgebildet werden, so dass sie nur einen geringen Bauraumbedarf hat.

Das erste Teil weist eine Rastvorrichtung auf, mit der das Kupplungsgegenstück rastend festlegbar ist. Das Kupplungsgegenstück wird also lösbar mit dem ersten Teil verbunden. Dies ist insbesondere für Reparaturarbeiten wichtig. Eine rastende Verbindung stellt dabei sicher, dass ein unbeabsichtigtes Lösen nicht erfolgt.

Dabei weist die Rastvorrichtung einen Bügel auf, der senkrecht zur Einführrichtung des Kupplungsgegenstücks bewegbar ist. Ein Lösen der Rastvorrichtung durch einfaches Ziehen am Kupplungsgegenstück ist damit nahezu ausgeschlossen. Vielmehr muss zum Lösen auf den Bügel eine Kraft aufgebracht werden, die senkrecht zu einer möglichen Bewegungsrichtung des Kupplungsgegenstücks liegt. Dabei kann der Bügel in Bewegungsrichtung des Kupplungsgegenstücks formschlüssig im ersten Teil geführt sein.

Vorzugsweise ist der Dichtring in einer Nut angeordnet, die im ersten Teil ausgebildet ist, wobei eine Seitenwand der Nut von einer Stirnseite des zweiten Teils gebildet ist. Durch die Nut wird der Dichtring in der gewünschten Lage gehalten. Dadurch, dass die Stirnseite des zweiten Teils eine Seitenwand der Nut bildet, kann auf einen entsprechenden Steg im ersten Teil verzichtet werden, so dass sich die axiale Länge weiter verkürzen lässt. Gleichzeitig dichtet der Dichtring so zwischen dem ersten und dem zweiten Teil ab.

Dabei ist besonders bevorzugt, dass das erste Teil mit dem zweiten Teil stoffschlüssig verbunden, insbesondere verschweißt ist. Durch eine stoffschlüssige Verbindung wird eine hermetisch dichte Verbindung zwischen den beiden Teilen erzielt. Gegebenenfalls kann zusätzlich auch noch eine Anschlussgeometrie vorhanden sein, um die Kontaktfläche zwischen dem ersten Teil und dem zweiten Teil zu vergrößern. Eine große Überlappung zwischen dem ersten Teil und dem zweiten Teil, wie es beispielsweise bei einer Presspassung erforderlich ist, ist bei einer stoffschlüssigen Verbindung nicht notwendig. Auch dies führt dazu, dass die Kupplungseinrichtung relativ kompakt ausgebildet werden kann. Dabei kann das erste Teil in unterschiedlichen Achspositionen mit dem zweiten Teil verbunden werden. Bei einer Schweißverbindung sind dafür keine unterschiedlichen Werkzeuge notwendig. Die Variationsvielfalt, mit der die Kupplungseinrichtung hergestellt werden kann, ist daher sehr hoch. Das erste Teil kann auch mit unterschiedlich ausgebildeten zweiten Teilen versehen werden, ohne dass besondere Werkzeuge erforderlich sind.

Vorteilhafterweise ist ein Kupplungsgegenstück in den ersten Anschlussbereich einführbar, wobei im zweiten Teil ein Anschlag für das Kupplungsgegenstück vorgesehen ist. Das Kupplungsgegenstück durchdringt also den ersten Teil und reicht bis in den zweiten Teil hinein. Die Führung für das Kupplungsgegenstück wird also nicht nur durch den ersten Teil, sondern auch durch den zweiten Teil aufgebracht. Der erste Teil kann dadurch relativ kurz ausgebildet sein. Aufgrund der stoffschlüssigen und damit hermetisch dichten Verbindung zwischen dem ersten und dem zweiten Teil sowie dem Dichtring, der zwischen dem ersten Teil und dem zweiten Teil angeordnet ist, ist es nicht erforderlich, dass das Kupplungsgegenstück weit in den zweiten Teil hineingeführt wird. Auch der zweite Teil kann daher mit einer relativ kurzen axialen Länge ausgeführt sein.

Vorteilhafterweise weist das erste Teil mindestens eine Schrägfläche auf, an der ein Ende des Bügels geführt ist, wobei die Schrägfläche in einem spitzen Winkel zur Bewegungsrichtung des Bügels angeordnet ist. Durch eine Bewegung des Bügels erfolgt dann ein Aufweiten, da das Ende des Bügels beim Herausziehen über die Schrägfläche nach außen geführt wird. Ein vollständiges Entfernen des Bügels ist dann nicht notwendig, um das Kupplungsgegenstück zu entfernen. Auch zum Öffnen des Bügels ist dann ein geringer Platz ausreichend, da der Bügel nicht vollständig entfernt werden muss, sondern nur um eine relativ geringe Strecke bewegt werden muss.

Dabei ist besonders bevorzugt, dass der Bügel U-förmig ausgebildet ist und zwei Enden aufweist, wobei jedes Ende an einer Schrägfläche geführt ist. Der Bügel wird dann beim Herausziehen symmetrisch aufgeweitet. Dadurch ist eine sehr kurze Verstellbewegung des Bügels ausreichend, um das Kupplungsgegenstück freizugeben. Gleichzeitig ist im eingerasteten Zustand ein sicherer Halt des Kupplungsgegenstücks im ersten Teil gewährleistet.

Vorzugsweise ist die Schrägfläche von zwei Anschlägen begrenzt. Diese Anschläge dienen als Verliersicherung, so dass der Bügel nicht unbeabsichtigt weit hinausgezogen und verloren werden kann.

In einer bevorzugten Ausführungsform erstreckt sich der erste Anschlussbereich senkrecht zum zweiten Anschlussbereich. Diese Ausbildung ist insbesondere bei beengten Platzverhältnissen vorteilhaft. Dabei sind auch Winkel zwischen dem ersten Anschlussbereich und dem zweiten Anschlussbereich denkbar, die von 90° abweichen.

Die Erfindung wird im Folgenden anhand eines bevorzugten Ausführungsbeispiels in Verbindung mit den Zeichnungen näher beschrieben. Hierin zeigen in schematischer Darstellung:
- Fig. 1: eine Kupplungseinrichtung in Schnittansicht,
- Fig. 2: die Kupplungseinrichtung in teilgeschnittener Form,
- Fig. 3: die Kupplungseinrichtung in räumlicher Darstellung und
- Fig. 4: eine Seitenansicht der Kupplungseinrichtung.

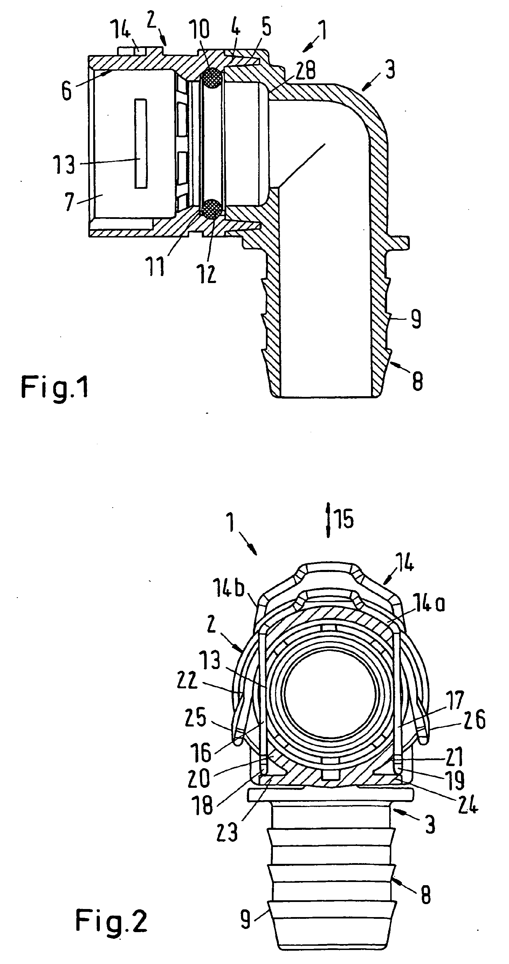

In Fig. 1 ist eine Kupplungseinrichtung 1 dargestellt, die ein erstes Teil 2 und ein zweites Teil 3 aufweist. Das erste Teil 2 und das zweite Teil 3 sind stoffschlüssig miteinander verbunden. In diesem Fall sind die beiden Teile 2, 3 miteinander verschweißt. Zusätzlich weist das erste Teil 2 eine Anschlussgeometrie 4 auf, die mit einer entsprechenden Geometrie 5 am zweiten Teil 3 zusammenwirkt. Dadurch wird die Verbindungsfläche zwischen dem ersten Teil 2 und dem zweiten Teil 3 vergrößert, so dass eine hermetisch dichte Verbindung gewährleistet ist.

Das erste Teil 2 weist einen ersten Anschlussbereich 6 auf, in den ein Kupplungsgegenstück 7 eingeführt ist. Das zweite Teil 3 weist einen zweiten Anschlussbereich 8 auf, auf den ein Schlauchende aufschiebbar ist. Zur Sicherung des Schlauches sind im zweiten Anschlussbereich 8 umlaufende Rippen 9 vorgesehen. Zusätzlich kann der Schlauch beispielsweise mit Hilfe einer Schlauchklemme am Anschlussbereich 8 gesichert werden.

Zwischen dem ersten Teil 2 und dem zweiten Teil 3 ist ein Dichtring 10 vorgesehen, wobei der Dichtring 10 in einer Nut 11 angeordnet ist, die im ersten Teil 2 ausgebildet ist. Eine Seitenwand in der Nut 11 wird dabei von einer Stirnseite 12 des zweiten Teils gebildet. Der Dichtring 10 erstreckt sich radial in den ersten Anschlussbereich 6 hinein, so dass er sicher am Kupplungsgegenstück 7 anliegt. Das Kupplungsgegenstück 7 weist bei diesem Ausführungsbeispiel eine Nut auf, in der der Dichtring 10 aufgenommen ist.

Das Kupplungsgegenstück 7 weist tangential zwei rechteckige Einformungen 13 auf. Mit diesen Einformungen 13 wirkt eine Rastvorrichtung zusammen, die einen Bügel 14 aufweist (Fig. 2). Der Bügel 14 ist senkrecht zur Bewegungsrichtung des Kupplungsgegenstücks 7 bewegbar. Die Bewegung des Bügels 14 ist in Fig. 2 mit einem Pfeil 15 gekennzeichnet. Der Bügel 14 ist U-förmig ausgebildet und weist zwei Schenkel 16, 17 mit jeweils einem Ende 18, 19 auf. Die Enden 18, 19 des Bügels 14 sind an jeweils einer Schrägfläche 20, 21 geführt, die am ersten Teil 2 angeordnet sind. Die Schrägflächen 20, 21 sind dabei im Wesentlichen tangential am ersten Teil 2 angeordnet.

In Fig. 2 ist der Bügel 14 in einer ersten, verrasteten Stellung 14a und einer zweiten, gelösten Stellung 14b dargestellt. In der verrasteten Stellung 14a ragen die Schenkel 16, 17 durch Öffnungen 22 im ersten Teil 2, so dass die Schenkel 16, 17 mit den Einformungen 13 im Kupplungsgegenstück 7 in Eingriff stehen. Eine axiale Bewegung des Kupplungsgegenstücks 7 wird dadurch verhindert. Die Öffnungen 22 dienen gleichzeitig zur axialen Sicherung des Bügels 14 im ersten Teil 2. In der verrasteten Stellung 14a liegen die Enden 18, 19 des Bügels 14 nicht unbedingt an der Schrägfläche 20, 21 an. Gesichert werden die Enden 18, 19 durch Anschläge 23, 24 der Schrägflächen 20, 21.

Der Bügel 14 in der gelösten Stellung 14b ist gegenüber der verrasteten Stellung 14a in Richtung des Pfeiles 15 linear verschoben. Dadurch wurden die Enden 18, 19 entlang der Schrägflächen 20, 21 auseinandergedrückt. Die Schenkel 16, 17 sind dadurch aus den Einformungen 13 hinausbewegt worden, so dass das Kupplungsgegenstück 7 axial aus dem ersten Anschlussbereich 6 herausgenommen werden kann. Ein Entfernen des Bügels 14 wird durch Anschläge 25, 26 an den Schrägflächen 20, 21 verhindert. Dadurch wird ein Verlieren des Bügels 14 nahezu unmöglich. Gleichzeitig wird dafür gesorgt, dass die Schenkel 16, 17 nicht vollständig aus den Öffnungen 22 hinausbewegt werden, so dass auch die axiale Lage des Bügels 14 gesichert bleibt.

Durch die Schrägflächen 20, 21 wird dafür gesorgt, dass bei einer relativ geringen Bewegung des Bügels 14 in einer Richtung senkrecht zur Bewegungsrichtung des Kupplungsgegenstücks 7 eine relativ große Aufweitung der Schenkel 16, 17 erfolgt. Für die Bewegung des Bügels und damit für ein Lösen der Rastvorrichtung muss also nur relativ wenig Freiraum zur Verfügung stehen. Gleichzeitig können die Enden 18, 19 des Bügels relativ einfach ausgebildet sein, da die Führung der Bewegung durch die Schrägflächen 20, 21 erfolgt.

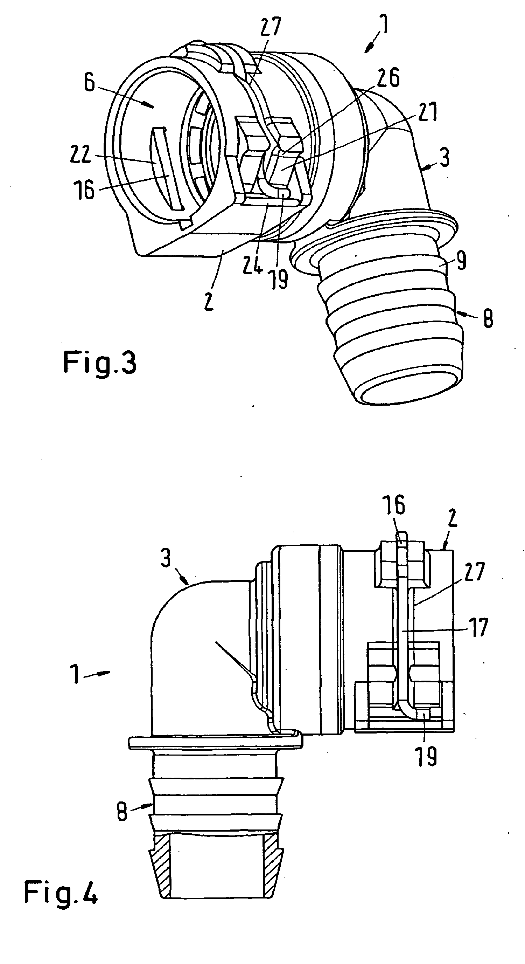

In Fig. 3 ist die Kupplungseinrichtung 1 ohne Kupplungsgegenstück 7 dargestellt. Der Bügel 14 befindet sich in der verrasteten Stellung. Es ist zu erkennen, dass der Schenkel 16 durch die Öffnung 22 im ersten Teil 2 ragt. Dieser sichtbare Teil des Schenkels 16 verrastet dann gegebenenfalls mit den Einformungen 13 des Kupplungsgegenstücks 7. Der Bügel 14 ist im ersten Teil 2 nicht nur in den Öffnungen 22 geführt, sondern auch in einer Nut 27. Die Gefahr, dass andere Teile am Bügel 14 hängen bleiben und diesen unbeabsichtigt öffnen, ist dadurch nahezu ausgeschlossen. Gleichzeitig kann eine relativ gute Kraftübertragung vom Bügel 14 auf das erste Teil 2 erfolgen.

In Fig. 4 ist die Kupplungseinrichtung 1 in Seitenansicht dargestellt, wobei der erste Anschlussbereich 6 senkrecht zum zweiten Anschlussbereich 8 angeordnet ist. Es ist zu erkennen, dass die Enden 18, 19 des Bügels 14 durch einfaches Umbiegen ausgeformt sind. Aufgrund der Schrägflächen 20, 21 ist eine derartig einfache Ausbildung ausreichend.

Durch die stoffschlüssige Verbindung zwischen dem ersten Teil 2 und dem zweiten Teil 3 kann die Kupplungseinrichtung 1 sehr kompakt ausgebildet sein. Dies wird noch dadurch unterstützt, dass zwischen dem ersten Teil 2 und dem zweiten Teil 3 eine Ringdichtung 10 angeordnet ist, die sowohl vom ersten Teil 2 als auch vom zweiten Teil 3 in ihrer Position gehalten wird. Für den Dichtring 10 ist daher nur ein geringer axialer Bauraum erforderlich. Gleichzeitig kann das Kupplungsgegenstück 7 sowohl vom ersten Teil 2 als auch vom zweiten Teil 3 geführt aufgenommen werden. Ein zu weites Einführen des Kupplungsgegenstücks 7 wird dabei durch einen Anschlag 28 im zweiten Teil 3 verhindert. Da sich die Führungslänge des ersten Teils 2 und des zweiten Teils 3 addieren, ergibt sich auch dann eine ausreichend große Führungslänge, wenn jedes Teil 2, 3 nur eine relativ kleine Führungslänge zur Verfügung stellt. Insgesamt ergibt sich so eine sehr kompakte Kupplungseinrichtung 1, die auch bei beengten Platzverhältnissen anwendbar ist.

Dabei wird durch das Vorsehen der Schrägflächen 20, 21 eine Rastverbindung zwischen dem ersten Teil 2 und dem Kupplungsgegenstück 7 möglich, die zum Lösen nur einen geringen Freiraum benötigt. Dadurch werden die Einsatzmöglichkeiten der Kupplungseinrichtung 1 weiter erweitert.

Durch das Vorsehen einer Schweißverbindung zwischen erstem Teil 2 und zweitem Teil 3 kann das zweite Teil 3 in nahezu beliebigem Winkel zum ersten Teil 2 angeordnet werden. Dabei kann auch das erste Teil 2, das die Rastvorrichtung aufweist, mit unterschiedlich ausgebildeten zweiten Teilen 3 kombiniert werden, so dass beispielsweise der Winkel zwischen dem ersten Anschlussbereich 6 und dem zweiten Anschlussbereich 8 variierbar ist.

Insgesamt ermöglicht die stoffschlüssige Verbindung also eine hohe Variationsvielfalt, wobei keine speziellen Werkzeuge erforderlich sind.

## Patentansprüche

1. Kupplungseinrichtung, die einen ersten Teil mit einem ersten Anschlussbereich und einen zweiten Teil mit einem zweiten Anschlussbereich aufweist, wobei zwischen erstem Teil (2) und zweitem Teil (3) ein Dichtring (10) angeordnet ist, der sich radial bis in den ersten Anschlussbereich (6) erstreckt, wobei das erste Teil (2) eine Rastvorrichtung aufweist, mit der das Kupplungsgegenstück (7) rastend festlegbar ist, wobei die Rastvorrichtung einen Bügel (14) aufweist, der senkrecht zur Einführrichtung des Kupplungsgegenstücks (7) bewegbar ist, **dadurch gekennzeichnet, dass** Enden (18, 19) des Bügels (14) an jeweils einer Schrägfläche (20, 21), die am ersten Teil (2) angeordnet sind, derart geführt sind, dass beim Öffnen des Bügels (14) die Enden (18, 19) über die Schrägflächen (20, 21) nach außen geführt werden, wobei ein Aufweiten des Bügels (14) erfolgt.

2. Kupplungseinrichtung nach Anspruch 1, **dadurch gekennzeichnet, dass** der Dichtring (10) in einer Nut (11) angeordnet ist, die im ersten Teil (2) ausgebildet ist, wobei eine Seitenwand der Nut (11) von einer Stirnseite (12) des zweiten Teils (3) gebildet ist.

3. Kupplungseinrichtung nach einem der Ansprüche 1 oder 2, **dadurch gekennzeichnet, dass** das erste Teil (2) mit dem zweiten Teil (3) stoffschlüssig verbunden, insbesondere verschweißt ist.

4. Kupplungseinrichtung nach einem der Ansprüche 1 bis 3, **dadurch gekennzeichnet, dass** ein Kupplungsgegenstück (7) in den ersten Anschlussbereich (6) einführbar ist, wobei im zweiten Teil (3) ein Anschlag (28) für das Kupplungsgegenstück (7) vorgesehen ist.

5. Kupplungseinrichtung nach einem der Ansprüche 1 bis 4, **dadurch gekennzeichnet, dass** das erste Teil (2) mindestens eine Schrägfläche (20, 21) aufweist, an der ein Ende (18, 19) des Bügels (14) geführt ist, wobei die Schrägfläche (20, 21) in einem spitzen Winkel zur Bewegungsrichtung (15) des Bügels (14) angeordnet ist.

6. Kupplungseinrichtung nach Anspruch 5, **dadurch gekennzeichnet, dass** der Bügel (14) U-förmig ausgebildet ist und zwei Enden (18, 19) aufweist, wobei jedes Ende (18, 19) an einer Schrägfläche (20, 21) geführt ist.

7. Kupplungseinrichtung nach einem der Ansprüche 5 oder 6, **dadurch gekennzeichnet, dass** die Schrägfläche (20, 21) von zwei Anschlägen (23, 24, 25, 26) begrenzt ist.

8. Kupplungseinrichtung nach einem der Ansprüche 1 bis 7, **dadurch gekennzeichnet, dass** sich der erste Anschlussbereich (6) senkrecht zum zweiten Anschlussbereich (8) erstreckt.

## Claims

1. Coupling device comprising a first part with a first connection region and a second part with a second connection region, a sealing ring (10) being arranged between the first part (2) and the second part (3) radially extending into the first connection region (6), wherein the first part (2) comprises a locking device with which the coupling counterpart (7) can be fixed in a locking manner, wherein the locking device comprises a clip (14) that is perpendicular moveable in a relation to an insert direction of the coupling counterpart (7), **characterized in that** the ends (18, 19) of the clip (14) are respectively guided on sloping surfaces (20, 21) arranged at the first part (2) such that while opening the clip (14) the ends (18, 19) are guided over the sloping surfaces (20, 21) to the outside, wherein a widening of the clip (14) is achieved.

2. Coupling device in accordance with claim 1, **characterized in that** the sealing ring (10) is arranged in a groove (11) formed in the first part (2), while a side wall of the groove (11) is formed by an end face (12) of the second part (3).

3. Coupling device in accordance with any of claims 1 or 2, **characterized in that** the first part (2) is connected to the second part (3) by a material bond, in particular a welded bond.

4. Coupling device in accordance with any of claims 1 to 3, **characterized in that** a coupling counterpart (7) can be inserted in the first connection region (6), wherein a stop (28) for the coupling counterpart (7) is provided in the second part (3).

5. Coupling device in accordance with any of claims 1 to 4, **characterized in that** the first part (2) comprises at least one sloping face (20, 21) on which an end (18, 19) of the clip (14) is guided, wherein the sloping face (20, 21) is arranged at an acute angle in relation to a direction of movement of the clip (14).

6. Coupling device in accordance with claim 5, **characterized in that** the clip (14) comprises a U-shaped form and has two ends (18, 19), each of the two ends (18, 19) being guided at a sloping face (20, 21).

7. Coupling device in accordance with any of claims 5 or 6, **characterized in that** the sloping face (20, 21) is limited by two stops (23, 24, 25, 26).

8. Coupling device in accordance with any of claims 1 to 7, **characterized in that** the first connection region (6) extends perpendicular in relation to the second connection region (8).

## Revendications

1. Dispositif de couplage, qui présente une première partie avec une première zone de raccordement et une seconde partie avec une seconde zone de raccordement, dans lequel on agence entre la première partie (2) et la seconde partie (3) une bague d'étanchéité (10), qui s'étend radialement jusque dans la première zone de raccordement (6), dans lequel la première partie (2) présente un dispositif d'encliquetage avec lequel le pendant de couplage (7) peut être fixé par encliquetage, dans lequel le dispositif d'encliquetage présente un étrier (14), qui peut être déplacé perpendiculairement au dispositif d'entrée du pendant de couplage (7), **caractérisé en ce que** les extrémités (18, 19) de l'étrier (14) sont guidées sur respectivement des faces inclinées (20, 21), qui sont agencées sur la première partie (2) de sorte que, à l'ouverture de l'étrier (14), les extrémités (18, 19) soient guidées vers l'extérieur via les faces inclinées (20, 21), moyennant quoi il se produit un élargissement de l'étrier (14).

2. Dispositif de couplage selon la revendication 1, **caractérisé en ce que** la bague d'étanchéité (10) est aménagée dans une gorge (11), qui est ménagée dans la première partie (2), une paroi latérale de la gorge (11) étant formée par une face frontale (12) de la seconde partie (3).

3. Dispositif de couplage selon l'une quelconque des revendications 1 ou 2, **caractérisé en ce que** la première partie (2) est reliée à la seconde partie (3) par adaptation de formes, en particulier par soudage.

4. Dispositif de couplage selon l'une quelconque des revendications 1 à 3, **caractérisé en ce qu'**un pendant de couplage (7) peut être introduit sans la première zone de raccordement (6), une butée (28) pour le pendant de couplage (7) étant prévue dans la seconde partie (3).

5. Dispositif de couplage selon l'une quelconque des revendications 1 à 4, **caractérisé en ce que** la première partie (2) présente au moins une surface inclinée (20, 21) sur laquelle une extrémité (18, 19) de l'étrier (14) est guidée, la surface inclinée (20, 21) étant agencée selon un angle aigu par rapport à la direction de déplacement (15) de l'étrier (14).

6. Dispositif de couplage selon la revendication 5, **caractérisé en ce que** l'étrier (14) est en forme de U et présente deux extrémités (18, 19), chaque extrémité (18, 19) étant guidée sur une surface inclinée (20, 21).

7. Dispositif de couplage selon l'une quelconque des revendications 5 ou 6, **caractérisé en ce que** la surface inclinée (20, 21) est délimitée par deux butées (23, 24, 25, 26).

8. Dispositif de couplage selon l'une quelconque des revendications 1 à 7, **caractérisé en ce que** la première zone de raccordement (6) s'étend perpendiculairement à la seconde zone de raccordement (8).
